# EUROPEAN PATENT APPLICATION

(11) **EP 4 814 700 A1**
(43) Date of publication of application: **30.09.2026**
(21) Application number: 26168243.9
(22) Date of filing: 26.03.2026
(51) Int. Cl.: G06F 8/65, G06F 11/14

(54) **UPDATING SOFTWARE IN A VEHICLE CONTROLLER BASED ON THE COMPARISON WITH REFERENCE DATA (OPTIMAL PERFORMANCE) RECEIVED FROM A SERVER**

(30) Priority: 29.03.2025 IN 202541031182
(71) Applicant: TVS Motor Company Limited, 600006 Chennai (IN)
(72) Inventor: Gudi, Venkata Ramana, 600006 Chennai (IN)
(74) Representative: Patentanwaltskanzlei Matschnig & Forsthuber OG

(57) **Abstract**

The claimed subject matter discloses methods 200 and a controller 102 for updating software in the vehicle controller 102. The method 200 comprises receiving reference parameters from a server 106, collecting real time parameters from sensors 116 in the vehicle 105, comparing real time parameters with reference parameters, updating the software in the controller, when the real time parameters do not match with the reference parameters. The method 200 discloses collecting real time parameters from sensors 116, comparing the real time parameters with the reference parameters, identifying a software module which is causing the negative impact if the real time parameters do not match with the reference parameters and restoring the software module which is causing the negative impact, with a software module from a backup version.

## Description

### TECHNICAL FIELD

The claimed subject matter in general relates to updating software in a vehicle. The claimed subject matter in particular relates to updating software in a vehicle controller to improve the performance of the vehicle. The claimed subject matter relates also to monitoring the vehicle performance after the updating the software and a fallback solution if the updating has a negative impact on the performance of the vehicle.

### BACKGROUND

Software updating in vehicle is known in the arts. The software updating may be Over The Air, OTA, or through diagnostic tools, where the vehicle control unit in the vehicle receives newer version of the software, over-writes the existing version of the software and runs the newer version of the software. The software may be for an entire operation of the vehicle control unit or for bug fixes, new feature implementations or for a new sub-system in the vehicle.

However there are challenges in the existing methodologies used. Software parameters may not be optimally configured for a given vehicle condition, leading to performance inefficiencies. The vehicle software may not update in time or may update incorrectly, leading to performance mismatches. Software updates may be too narrowly tailored to specific conditions, causing issues in different driving environments. The predefined reference parameters may not align with actual vehicle conditions, causing suboptimal system behavior.

Some prior arts use open loop software updating where the software is downloaded and executed. This may lead to improper configurations of software modules or operating parameters.

There is a need for a closed loop software updating method where the performance is monitored before and after the software updating to ensure the performance improves once the newer version of software is installed and executed.

The claimed subject matter addresses the above discussed issues.

### SUMMARY

The claimed subject matter is defined in the independent claims. Further details are defined in the dependent claims.

The subject matter discloses a system, a device and a method for closed loop software updating.

The subject matter discloses a system for software updating. The system comprises a vehicle controller in a vehicle, a server, a diagnostic tool which provide newer versions of the software for downloading.

The subject matter discloses a method of updating software in a vehicle controller. The method is performed by the vehicle controller. The method comprises receiving reference parameters from a server, the reference parameters representing optimal performance of the vehicle; collecting real time parameters from sensors in the vehicle, the real time parameters representing the actual performance of the vehicle; comparing real time parameters with reference parameters; updating the software in the controller, when the real time parameters do not match with the reference parameters; collecting real time parameters from sensors in the vehicle; comparing the real time parameters with the reference parameters; identifying a software module which is causing the negative impact, if the real time parameters do not match with the reference parameters and restoring the software module which is causing the negative impact, with a software module from a backup version.

The steps of updating the software comprise storing the present version of the software as the backup version in a memory, receiving a newer version of the software from the sever or from the diagnostic tool, over-writing the present version of the software with the version received from the server or from the diagnostic tool and executing the updated software.

### BRIEF DESCRIPTION OF THE DRAWINGS

The detailed description is described with reference to the accompanying figures. In the figures, similar reference numerals are used throughout the drawings to reference like features and components.
Figure 1 illustrates a system for software updating
Figure 2 illustrate a method of software updating

### DESCRIPTION OF THE INVENTION

The claimed subject matter now will be described with exemplary embodiments. However, the claimed subject matter may be embodied in many different forms and should not be construed as limited to the embodiments described herein. These embodiments are provided only as examples so that this disclosure is clear and concise.

Some of the terms used in this document may be used with different expressions and also interchangeably. Some examples are given below.

The term 'Vehicle' may refer to a two wheeled motor vehicle, a three wheeled motor vehicle or a car or any passenger motor vehicle or goods carrying motor vehicle. The vehicle may be an internal combustion driven vehicle or an electric vehicle. The term 'coupled' is used to indicate coupling between different elements, it may mean directly coupled or indirectly coupled through additional elements. The terms 'module' and 'component' may be used interchangeably.

Only the details/components required to describe the claimed subject matter in specific, are disclosed in this document. The details/components which are commonly known or understood by people skilled in the art may not be covered in this document.

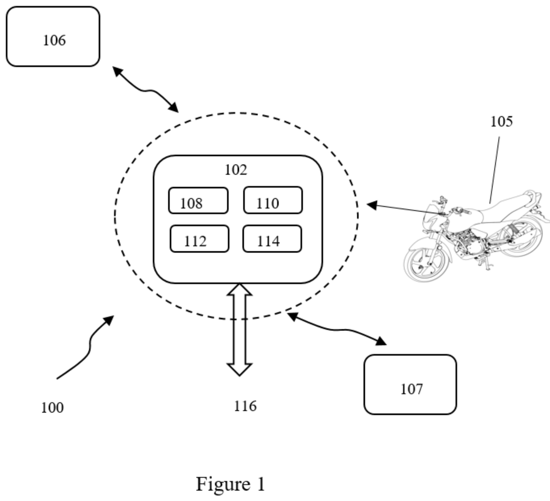

Figure 1 illustrates a system 100 for software updating. The system 100 comprises a vehicle controller 102 in a vehicle 105, a server 106, and a diagnostic tool 107. The server 106 and/or the diagnostic tool 107 provide newer versions of the software for downloading. The vehicle controller 102 is referred as controller 102. The vehicle 105 is shown as a two wheeled motor vehicle only as an example. The communication between the controller 102 and the server 106, the diagnostic tool 107 could be any kind of wireless communication or a wired communication. The communication unit 114 may comprise standard hardware and firmware.

The controller 102 comprises a processor 108, a memory 110 coupled to the processor 108, input output interfaces 112. In an embodiment the controller 102 comprises a communication unit 114. In an embodiment the communication unit 114 may be external to the controller 102. In an embodiment the communication unit 114 may comprise a GSM module. The communication unit 114 handles the transmission and reception of data to and from the server 106 and the diagnostic tool 107. The communication unit 114 comprises a transmitter module to transmit data and a receiver module to receive data. The transmitter module and the receiver module may be combined into one as a transceiver.

The controller 102 comprises a download module to download the software, a verification module to verify performance of the software.

The controller 102 keeps continuously monitoring vehicle performance through various parameters received from the sensors 116. The sensor data is received through the input output interfaces 112. Some of the typical parameters the controller 102 monitors for the vehicle performance are, Electronic control unit fault codes or the Diagnostic Trouble Codes (DTCs), Battery Health & Charge Cycles, Sensor Calibration Data, Performance and Efficiency Metrics from On Board Diagnostic (OBD) message/Controller Area Network (CAN) messages, Fuel Efficiency, Emissions, Torque output, Power Output, Thermal Management Data, Cyber security Threats etc. This list is given only as an example and there may be other parameters. Each of these parameters may be provided by sensors, by different sub-systems or modules in the vehicle 105.

The server 106 stores the reference parameters for optimal vehicle performance. The controller 102 is responsible for continuously gathering real-time data from sensors 116, analyzing it against reference parameters, and validating vehicle performance. The reference parameters may be uploaded to the server 106 by vehicle manufacturers at regular intervals for different models of the vehicles. Based on the manufacturer and the model of the vehicle 105, the controller 102 requests appropriate reference parameters. In an embodiment the reference parameters may also consider the life of the vehicle, kilometers covered, life of battery passed etc. In an embodiment the controller 102 transmits these vehicle life related parameters to the server 106 for analysis.

The controller 102 receives at regular intervals, from the server 106, reference parameter values which need to be monitored for vehicle performance. The reference parameter values are referred as reference parameters.

The controller 102 gathers the real time values of the same parameters, referred as real time parameters, from the sensors 116. The controller 102 compares the reference parameters with the real time parameters from the sensors 116. If there is a mismatch, the controller 102 needs to download the newer version of software. The newer version of the software may be downloaded from the server 106 or through a diagnostic tool 107. Before downloading the newer version of the software, the controller 102 stores the present version of the software as the backup version in the memory 110. The controller 102 requests and receives a newer version of the software from the server 106 or from the diagnostic tool 107. The controller 102 over-writes the present version of the software with the version received from the server 106/diagnostic tool 107 and executes the updated software. The newer version of the software is downloaded in a dedicated area in the memory 110. The newer version of the software may contain newer values for some of the reference parameters.

The controller 102 needs to re-evaluate the vehicle performance after downloading the newer version of the software. The controller 102 again collects the real time parameters from the sensors 106. The real time parameters are compared with the reference parameters received from the server 106/diagnostic tool. The controller 102 determines whether there is a negative impact on the performance of the vehicle, by comparing the real time parameters with the reference parameters. If there is a negative impact in the vehicle performance, it may be because some of the real time parameters may not be optimally used by the newer version of the software. The negative impact indicates that some of the software modules in the newer version of the software may not be optimized for the present vehicle condition or for the real time parameters. Under this scenario, instead of completely discarding the newer version of the software, the controller 102 identifies which software modules among the newer version of the software may be having negative impact on the vehicle performance.

As a first step to identify which software modules from the newer version of the software may be having the negative impact on the vehicle performance, the controller 102 performs at least one of running diagnostic algorithms, analysing Diagnostic Trouble Codes, analysing data from sensors 116 and analyzing system logs. System logs are the reports recorded at regular intervals regarding the vehicle performance under various conditions, the errors encountered, the underperforming sub-systems of the vehicle etc.

Through the above steps the controller 102 identifies the vehicle sub-system which is causing the negative impact. Once the sub-system which is causing the negative impact is identified, the controller 102 identifies the software module which is responsible for the vehicle sub-system which is causing the mismatch, as every sub-system is managed by a software module. For example, the Heating Ventilation and Air Conditioning (HVAC) sub-system is managed by HVAC software module. The infotainment sub-system is managed by infotainment software module. Other examples may be braking software module, cyber security software module, thermal management software module, Battery charge cycles and battery management, sensor recalibration, ECU Firmware Updates to optimize engine performance, fuel efficiency, emissions, Cyber security, Powertrain, Connectivity, Sensor Fusion, Telematics, Braking and Steering etc.

Thus, once the controller 102 identifies, which software module is causing negative impact on the performance of the vehicle 105, the controller 102 may implement a fall back solution. The fall back solution comprises deleting that software module which is causing negative impact on the vehicle performance. If deleting the software module is not feasible, other fall back option is restoring the software module from the back up version.

Once the fall back solution is implemented, the controller 102 collects real time parameters from the sensors 116 and again evaluates the vehicle performance by comparing real time parameters with reference parameters. If the negative impact still persists, the controller may request the server 106 to send a different version of the software for downloading.

If the impact still persists after downloading different version of the software, the controller 102 may indicate the user to take the vehicle 105 to the service station. The indication to the user may be though warning lamps.

In an embodiment the controller 102 is stand-alone unit connectable to an electronic control unit, ECU, in a vehicle 105 which controls the vehicle 105. In an embodiment the functionalities of the controller 102 are implemented in the electronic control unit in a vehicle which controls the vehicle 105. In an embodiment the controller 102 and the ECU are one and same unit.

The processor 108 may comprise one or more of central processing units (CPU), digital signal processors (DSP), application specific integrated circuits (ASIC), a controller, field programmable gate arrays (FPGA), or any other hardware device, a firmware device, or any combination of these. The processor 108 is configured using control registers, input output ports, firmware, input output interfaces etc. to perform the operations described herein.

In an embodiment, the memory 110 may comprise one or more volatile and non-volatile memory components which are capable of storing data and instructions to be executed.

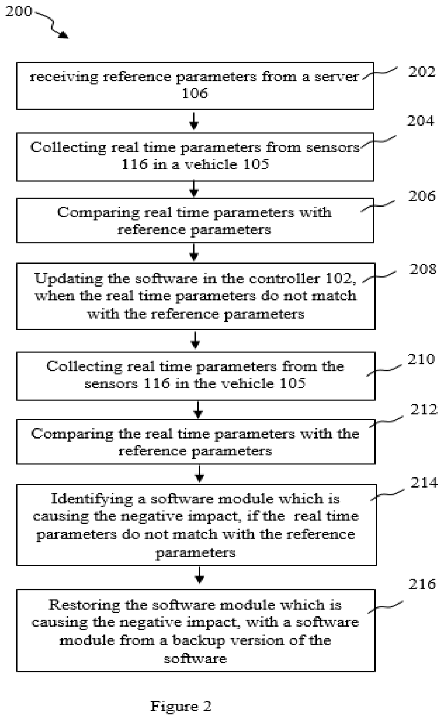

Figure 2 illustrates a method 200 for updating a software in the vehicle controller 102. Step 202 discloses receiving reference parameters from a server 106, the reference parameters representing optimal performance of the vehicle 105. Step 204 discloses collecting real time parameters from the sensors 116 in the vehicle 105, the real time parameters representing the actual performance of the vehicle 105. Step 206 discloses comparing real time parameters with reference parameters. Step 208 discloses updating the software in the controller 102, when the real time parameters do not match with the reference parameters. Step 210 discloses collecting real time parameters from sensors 116 in the vehicle 105. Step 212 discloses comparing the real time parameters with the reference parameters. Step 214 discloses identifying a software module which is causing the negative impact, if the real time parameters do not match with the reference parameters. Step 216 discloses restoring the software module which is causing the negative impact, with a software module from a backup version.

The steps of updating the software comprise storing the present version of the software as the backup version in a backup area in the memory 110, receiving a new version of the software from the sever 106/diagnostic tool 107, over-writing the present version of the software with the version received from the server 106 or diagnostic tool 107 and executing the updated software.

Identifying the software module responsible for the vehicle sub-system which is having negative impact, comprises identifying a vehicle sub-system which is causing the negative impact and then identifying the software module which manages that sub-system.

The disclosed subject matter has various technical advantages, some are listed below.

The controller 102 ensures that software updates do not degrade vehicle performance by continuously monitoring and adjusting parameters in real time.

Unlike traditional update mechanisms, this disclosure autonomously detects discrepancies after a software update and pinpoints the exact cause without requiring manual intervention.

The software update mechanism dynamically adapts to different driving conditions, vehicle wear, and user preferences, ensuring that software updates remain effective over time. This is achieved by downloading optimized software versions.

Instead of reverting to older software versions when issues arise, the controller 102 selectively modifies or disables problematic software modules, maintaining overall update integrity.

The subject matter supports both over-the-air (OTA) and local/wired software updates, allowing flexibility in software deployment based on network availability and security requirements.

Since the system 100 automates performance monitoring and corrective actions, vehicle downtime due to faulty updates is significantly reduced, improving operational efficiency.

The architecture of the system is designed to be scalable and adaptable, allowing manufacturers to apply the same update framework across various vehicle models and configurations.

By identifying and modifying only the affected software modules instead of performing full-software updates, the system 100 reduces computational load, storage usage, and network bandwidth consumption during updates.

### LIST OF REFERENCE NUMERALS

- 100: System for updating software in a vehicle controller
- 102: Vehicle controller
- 106: Server
- 107: Diagnostic tool
- 108: Processor
- 110: Memory
- 112: Input Output interfaces
- 114: Communication unit
- 116: Sensors

## Claims

1. A method (200) for updating a software in a vehicle (105), the method performed by a vehicle controller (102), the method comprising:
receiving (202) reference parameters from a server (106), the reference parameters representing optimal performance of the vehicle;
collecting (204) real time parameters from sensors (116) in the vehicle (105), the real time parameters representing the actual performance of the vehicle (105);
comparing (206) real time parameters with reference parameters;
updating (208) the software in the controller (102), when the real time parameters do not match with the reference parameters;
collecting (210) real time parameters from sensors (116) in the vehicle (105);
comparing (212) the real time parameters with the reference parameters;
identifying (214) a software module which is causing a negative impact, if the real time parameters do not match with the reference parameters; and
restoring (216) the software module which is causing the negative impact, with a software module from a backup version of the software.

2. The method (200) as claimed in claim 2, wherein collecting the real time parameters comprises collecting at least one of:
Electronic Control Unit, ECU, fault codes or the Diagnostic Trouble Codes (DTCs), battery health and charge cycles, sensor calibration data, performance and efficiency metrics from On Board Diagnostic, OBD, message or
Controller Area Network, CAN, messages, fuel efficiency, emission data, torque output, power output, thermal management data and cyber-security threats.

3. The method (200) as claimed in claim 1, wherein updating the software comprises:
storing the present version of the software as the backup version in a backup area in a memory (110);
receiving a new version of the software from the sever (106) or a diagnostic tool (107);
over-writing the present version of the software with the version received from the server (106) or the diagnostic tool (107); and
executing the updated software.

4. The method (200) as claimed in claim 1, wherein identifying the software module which is causing the negative impact comprises:
identifying the vehicle sub-system which is causing the negative impact, by analysing at least one of diagnostic trouble Codes, data from sensors 116 and system logs; and
identifying the software module responsible for the vehicle sub-system which is causing the negative impact.

5. The method (200) as claimed in claim 1, wherein identifying the software module responsible for the vehicle sub-system causing the negative impact, comprises identifying at least one software module from the group of software modules: battery charge cycles and battery management, sensor recalibration, ECU firmware updates to optimize engine performance, fuel efficiency, emissions, Infotainment device firmware, Cyber security, Powertrain; Connectivity, Sensor Fusion, Telematics, HVAC Controls, Braking and Steering.

6. The method (200) as claimed in claim 1, wherein the controller (102) shares the vehicle life related parameters with the server (106), the vehicle life related parameters comprising at least one of life of vehicle (105), kilometers covered and battery life passed.

7. A device (102) for updating a software in a vehicle (105), the device comprising:
a processor (108); and
a memory (110) coupled to the processor (108);
the processor (108) configured to:
receive reference parameters from a server (106), the reference parameters representing optimal performance of the vehicle;
collect real time parameters from sensors (116) in the vehicle (105), the real time parameters representing the actual performance of the vehicle (105);
compare real time parameters with reference parameters;
update the software in the controller (102), when the real time parameters do not match with the reference parameters;
collect real time parameters from sensors (116) in the vehicle (105);
compare the real time parameters with the reference parameters;
identify a software module which is causing a negative impact, if the real time parameters do not match with the reference parameters; and
restore the software module which is causing the negative impact, with a software module from a backup version.

8. The device (102) as claimed in claim 7, comprising:
a communication unit (114) to transmit and receive data from the device (102).

9. The device (102) as claimed in claim 7, wherein the communication unit (114) is configured to establish a wireless communication with a server (106).

10. The device (102) as claimed in claim 7, wherein the communication unit (114) is configured to establish at least one of a wired communication and a wireless communication with a diagnostic tool (107).

11. The device (102) as claimed in claim 7, comprising:
input output interfaces (112) to connect to sensors (116) to receive real time parameters from the sensors (116).

12. The device 102 as claimed in claim 7 is connectable to an Electronic Control Unit, ECU, in the vehicle (105) to monitor vehicle performance.

13. The device 102 as claimed in claim 7 is implemented in an existing Electronic Control Unit in the vehicle (105).
